# EUROPÄISCHE PATENTSCHRIFT

(11) **EP 3 433 632 B1**
(45) Veröffentlichungstag und Bekanntmachung des Hinweises auf die Patenterteilung: **09.09.2020**
(21) Anmeldenummer: 17712999.6
(22) Anmeldetag: 23.03.2017
(51) Int. Cl.: G01S 17/58, G01S 7/48, G01S 17/42, G01S 17/93

(54) **VERFAHREN ZUR ERFASSUNG VON WENIGSTENS EINEM OBJEKT, VORRICHTUNG EINER SENSOREINRICHTUNG, SENSOREINRICHTUNG UND FAHRERASSISTENZSYSTEM MIT WENIGSTENS EINER SENSOREINRICHTUNG**
METHOD FOR CAPTURING AT LEAST ONE OBJECT, APPARATUS OF A SENSOR DEVICE, SENSOR DEVICE, AND DRIVER ASSISTANCE SYSTEM HAVING AT LEAST ONE SENSOR DEVICE
PROCÉDÉ DE DÉTECTION D'AU MOINS UN OBJET, DISPOSITIF D'UN APPAREIL DE DÉTECTION, APPAREIL DE DÉTECTION ET SYSTÈME D'ASSISTANCE À LA CONDUITE COMPRENANT AU MOINS UN APPAREIL DE DÉTECTION

(30) Priorität: 24.03.2016 DE 102016105536
(43) Veröffentlichungstag der Anmeldung: 30.01.2019
(73) Patentinhaber: Valeo Schalter und Sensoren GmbH, 74321 Bietigheim-Bissingen (DE)
(72) Erfinder: BLOB, Philipp, 74321 Bietigheim-Bissingen (DE)
(74) Vertreter: Kluth, Philipp
(86) Internationale Anmeldenummer: PCT/EP2017/056916
(87) Internationale Veröffentlichungsnummer: WO 2017/162788

(56) Entgegenhaltungen:
- JP-A- 2004 271 513
- US-A1- 2008 166 024
- US-A1- 2015 120 244
- US-A1- 2016 040 979

## Beschreibung

### Technisches Gebiet

Die Erfindung betrifft ein Verfahren zur optischen Erfassung von wenigstens einem Objekt mit wenigstens einer Sensoreinrichtung eines Fahrzeugs, bei dem mit der wenigstens einen Sensoreinrichtung optische Sendesignale in einen Überwachungsbereich gesendet werden und von Objektpunkten des wenigstens einen Objekts reflektierte Sendesignale als Empfangssignale winkelaufgelöst bezüglich einer Hauptüberwachungsrichtung der wenigstens einen Sensoreinrichtung erfasst werden, und aus einem Zusammenhang zwischen dem Sendesignalen und den Empfangssignalen eine räumliche Verteilung der Objektpunkte des wenigstens einen Objekts relativ zu der wenigstens einen Sensoreinrichtung ermittelt wird und das wenigstens eine Objekt als stationär oder nicht stationär kategorisiert wird.

Ferner betrifft die Erfindung eine Vorrichtung einer optischen Sensoreinrichtung eines Fahrzeugs zur optischen Erfassung von wenigstens einem Objekt, insbesondere zur Ausführung des erfindungsgemäßen Verfahrens, mit wenigstens eine Auswerteteil zum Ermitteln wenigstens einer Winkelauflösung von Ausbreitungsrichtungen von Sendesignalen und/oder Empfangssignalen bezüglich einer Hauptüberwachungsrichtung der wenigstens einen Sensoreinrichtung und zur Ermittlung einer räumlichen Verteilung von Objektpunkten des wenigstens einen Objekts, an denen die Sendesignale reflektiert und als Empfangssignale zur Sensoreinrichtung zurück gesendet werden, relativ zu der wenigstens einen Sensoreinrichtung aus einem Zusammenhang zwischen den Sendesignalen und den Empfangssignalen und wobei die Vorrichtung wenigstens ein Kategorisierungsteil aufweist zur Kategorisierung des wenigstens einen Objekts als stationär oder nicht stationär.

Des Weiteren betrifft die Erfindung eine Sensoreinrichtung eines Fahrzeugs mit wenigstens einer Vorrichtung zur optischen Erfassung von wenigstens einem Objekt, insbesondere zur Ausführung des erfindungsgemäßen Verfahrens, mit wenigstens einem Sender zur Aussendung von optischen Sendesignalen in einen Überwachungsbereich und wenigstens einem Empfänger zur Erfassung von an Objektpunkten des wenigstens einen Objekts reflektierten Sendesignalen als Empfangssignale, wobei die Vorrichtung wenigstens ein Auswerteteil aufweist zum Ermitteln wenigstens einer Winkelauflösung von Ausbreitungsrichtungen der Sendesignale und/oder der Empfangssignale bezüglich einer Hauptüberwachungsrichtung der wenigstens einen Sensoreinrichtung und zur Ermittlung einer räumlichen Verteilung der Objektpunkte des wenigstens einen Objekts relativ zu der wenigstens einen Sensoreinrichtung aus einem Zusammenhang zwischen den Sendesignalen und den Empfangssignalen und wobei die Vorrichtung wenigstens ein Kategorisierungsteil aufweist zur Kategorisierung des wenigstens einen Objekts als stationär oder nicht stationär.

Außerdem betrifft die Erfindung ein Fahrerassistenzsystem eines Fahrzeugs mit wenigstens einer Sensoreinrichtung mit wenigstens einer Vorrichtung zur optischen Erfassung von wenigstens einem Objekt, insbesondere zur Ausführung des erfindungsgemäßen Verfahrens, mit wenigstens einem Sender zur Aussendung von optischen Sendesignalen in einen Überwachungsbereich und wenigstens einem Empfänger zur Erfassung von an Objektpunkten des wenigstens einen Objekts reflektierten Sendesignalen als Empfangssignale, wobei die Vorrichtung wenigstens ein Auswerteteil aufweist zum Ermitteln wenigstens einer Winkelauflösung von Ausbreitungsrichtungen der Sendesignale und/oder der Empfangssignale bezüglich einer Hauptüberwachungsrichtung der wenigstens einen Sensoreinrichtung und zur Ermittlung einer räumlichen Verteilung der Objektpunkte des wenigstens einen Objekts relativ zu der wenigstens einen Sensoreinrichtung aus einem Zusammenhang zwischen den Sendesignalen und den Empfangssignalen und wobei die Vorrichtung wenigstens ein Kategorisierungsteil aufweist zur Kategorisierung des wenigstens einen Objekts als stationär oder nicht stationär.

### Stand der Technik

Aus der EP 0 932 052 A2 ist eine Radarvorrichtung zur Detektion von Entfernungen und Relativgeschwindigkeiten von Hindernissen wie vorausfahrenden Fahrzeugen bekannt. Die Radarvorrichtung hat einen Stationär-Objekt-Identifizierer zur Erkennung von stationären Objekten wie Leitplanken und dergleichen und einen Stationär-Objekt-Ausscheider zur Entfernung von Daten, die als zu einem derartigen stationären Objekt gehörend identifiziert werden. Der Stationär-Objekt-Erkenner detektiert die Peakdichte in einem Schwebungsspektrum, welches als Differenz zwischen einer gesendeten und einer empfangenen Frequenz eines Radarstrahls ermittelt wird. Der Stationär-Objekt-Erkenner erkennt Peakgruppen als stationäre Objekte, deren Peakdichten über einem vorgegebenen Wert liegen. Somit ist es möglich, stationäre Objekte am Straßenrand aus der Peakdichte zu erkennen.

Aus der US 2015/0120244 A1 ist ein Verfahren, eine Vorrichtung und ein Computerprogrammprodukt zur Abschätzung einer Straßenbreite bekannt. Bei dem Verfahren wir eine Punktwolke ausgewertet, die eine Umgebung repräsentiert. Zur Generierung der Punktwolke wird die Umgebung mit einem Laserscanner abgetastet.

Der Erfindung liegt die Aufgabe zugrunde, ein Verfahren, eine Vorrichtung einer Sensoreinrichtung, eine Sensoreinrichtung und ein Fahrerassistenzsystem der eingangs genannten Art zu gestalten, bei denen die Erkennung von stationären Objekten verbessert, insbesondere vereinfacht und/oder genauer, realisiert werden kann.

### Offenbarung der Erfindung

Diese Aufgabe wird erfindungsgemäß bei dem Verfahren dadurch gelöst, dass eine räumliche Dichte der erfassten Objektpunkte in wenigstens einem Bereich des wenigstens einen Objekts ermittelt wird und falls die Dichte der erfassten Objektpunkte kleiner ist als ein vorgebbarer oder vorgegebener Schwellwert, das wenigstens eine Objekt als stationär kategorisiert wird.

Erfindungsgemäß wird eine Vielzahl von Objektpunkten des wenigstens einen Objekts winkelaufgelöst erfasst. Dabei wird die Winkelabhängigkeit aus dem Winkel einer Ausbreitungsrichtung des entsprechenden Sendesignals und/oder des Empfangssignals zu der Hauptüberwachungsrichtung der Sensoreinrichtung bestimmt. Vorteilhafterweise können die Winkelabstände der Ausbreitungsrichtungen vom Sendesignalen und/oder Empfangssignalen, mit denen der Überwachungsbereich erfasst wird, äquidistant sein. Je nach Orientierung des wenigstens einen Objekts relativ zur Hauptüberwachungsrichtung verändert sich ein Abstand zwischen den erfassten Objektpunkten, in denen die Sendesignale auftreffen und zu Empfangssignalen reflektiert werden. Falls die Sendesignale senkrecht auf eine Oberfläche des wenigstens einen Objekts treffen, wird eine maximale Dichte von erfassten Objektpunkten realisiert. Die minimale Dichte der erfassten Objektpunkte wird in dem Fall realisiert, dass eine Oberfläche des wenigstens einen Objekts nahezu parallel zur Hauptüberwachungsrichtung verläuft und die Sendesignale unter einem entsprechend kleinen Winkel auf das wenigstens eine Objekt treffen. Dieser trigonometrische Zusammenhang wird erfindungsgemäß genutzt, um stationäre Objekte von nicht stationären Objekten zu unterscheiden.

Vorteilhafterweise können die Sendesignale als Sendestrahlen und/oder die Empfangssignal als Empfangsstrahlen realisiert sein. Vorteilhafterweise können die Sendesignale und/oder die Empfangssignale optisch oder andersartig im Raum ausbreitbar sein.

Stationär oder statisch im Sinne der Erfindung bedeutet, dass das Objekt insbesondere bezüglich einer Fahrbahn stationär ist. Stationäre Objekte sind insbesondere Leitplanken oder Fahrbahnbegrenzungen. Im Unterschied dazu wird ein stehendes Fahrzeug als nicht stationär im Sinne der Erfindung betrachtet, da es sich grundsätzlich relativ zur Fahrbahn bewegen kann. Ziel ist es, stationäre Objekte, insbesondere lang gestreckte Leitplanken, von nicht stationären Objekten, insbesondere anderen Fahrzeugen, zu unterscheiden.

Erfindungsgemäß wird die Dichte der erfassten Objektpunkte in wenigstens einem Bereich des wenigstens einen Objekts ermittelt. Die Dichte wird mit einem vorgebbaren Schwellwert verglichen. Der Schwellwert kann vorab insbesondere empirisch ermittelt und in einer Speichervorrichtung der Sensoreinrichtung gespeichert werden. Alternativ oder zusätzlich kann ein Schwellwert dynamisch beim Betrieb der Sensoreinrichtung ermittelt werden.

Falls die Dichte kleiner ist als der vorgebbare Schwellwert, kann davon ausgegangen werden, dass das betreffende Objekt ein stationäres Objekt ist. Das überprüfte Objekt wird dann entsprechend als stationär kategorisiert. Kategorisieren im Sinne der Erfindung bedeutet, dass wenigstens eine Information, insbesondere ein Wert, eine Größe und/oder ein Signal oder dergleichen, erzeugt wird, welches das Objekt bezüglich stationär oder nicht stationär charakterisiert. Diese Information kann zur weiteren Verarbeitung oder als Entscheidungsgrundlage für weitere Verfahrensschritte bereitgestellt werden. Vorteilhafterweise kann, falls das wenigstens eine Objekt als stationär kategorisiert wird, wenigstens eine Einschätzungsgröße und/oder wenigstens eine Wahrscheinlichkeitsgröße erzeugt und/oder verändert werden. Alternativ oder zusätzlich kann, falls das wenigstens eine Objekt als nicht stationär kategorisiert wird, wenigstens eine entsprechende gegenteilige Einschätzungsgröße erzeugt und/oder verändert werden. Mit der gegenteiligen Einschätzungsgröße kann eine Wahrscheinlichkeitsgröße für die Einschätzung des wenigstens einen Objekts als stationäres Objekts gegenteilig beeinflusst werden. Insbesondere kann eine Einschätzungsgröße für die Kategorisierung als stationäres Objekt einen positiven Wert und die entsprechende gegenteilige Einschätzungsgröße für die Kategorisierung als nicht stationäres Objekt den entsprechenden negativen Wert oder umgekehrt aufweisen.

Bei der wenigstens einen Einschätzungsgröße und/oder der wenigstens einen Wahrscheinlichkeitsgröße kann es sich vorteilhafterweise um einen digitalen Wert oder einen Zähler handeln. Die wenigstens eine Einschätzungsgröße und/oder die wenigstens eine Wahrscheinlichkeitsgröße kann entweder für eine Kategorisierung des Objekts als stationär oder nicht stationär eingesetzt werden. Die wenigstens eine Einschätzungsgröße und/oder die wenigstens eine Wahrscheinlichkeitsgröße kann insbesondere einer elektronischen Einrichtung eines Fahrerassistenzsystems übermittelt werden.

Vorteilhafterweise kann das erfindungsgemäße Verfahren in Kombination mit einem Verfahren zur Verfolgung von Objekten, einem sogenannten Tracking, eingesetzt werden. Dabei können Objekte mit der wenigstens einen Sensoreinrichtung erfasst und deren zeitliches Verhalten, insbesondere ihre Entfernung und/oder ihre Relativgeschwindigkeit bezüglich des eigenen Fahrzeugs, verfolgt werden. Dabei wird ermittelt, ob sich eine Position eines Objekts im Vergleich zu einer vorherigen Durchführung des Verfahrens ändert. Mit dem erfindungsgemäßen Verfahren kann vermieden werden, dass stationäre Objekte wie Leitplanken, die nicht in Gänze von der wenigstens einen Sensoreinrichtung erfasst werden können, fälschlicherweise als nicht stationär oder dynamisch verfolgt werden. Diese Fehleinschätzung kann dadurch verursacht werden, dass bei fortwährender Durchführung der Überprüfung des Überwachungsbereichs jeweils unterschiedliche Teilabschnitte des entsprechenden stationären Objekts, insbesondere der Leitplanke, erfasst werden, welche sich scheinbar mit dem Fahrzeug mitbewegend zeigen. Mit dem erfindungsgemäßen Verfahren werden derartige Objekte als stationär erfasst und entsprechend klassifiziert.

Vorteilhafterweise kann die wenigstens eine Sensoreinrichtung mit den Sendesignalen einen Überwachungsbereich erfassen. Die Hauptüberwachungsrichtung der wenigstens einen Sensoreinrichtung kann dabei durch das Zentrum des Überwachungsbereichs führen.

Vorteilhafterweise kann das erfindungsgemäße Verfahren als Vorklassifizierung, als Nachklassifizierung oder finale Klassifizierung der erfassten Objekte als stationär oder nicht stationär eingesetzt werden. Durch eine Vorklassifizierung kann in einem frühen Stadium der Überwachung entschieden werden, ob ein weiteres Tracking des Objekts erforderlich und/oder sinnvoll ist. Auf diese Weise kann das Verfahren effizienter, insbesondere Zeit sparend, gestaltet werden.

Vorteilhafterweise kann die wenigstens eine Sensoreinrichtung an einer Frontseite eines Fahrzeugs angeordnet sein. Auf diese Weise kann die wenigstens eine Sensoreinrichtung einen Überwachungsbereich in Fahrtrichtung vor dem Fahrzeug überwachen. Alternativ oder zusätzlich kann wenigstens eine Sensoreinrichtung an einer Seite und/oder einer Rückseite des Fahrzeugs angeordnet sein.

Vorteilhafterweise kann eine Hauptüberwachungsrichtung der wenigstens einen Sensoreinrichtung parallel zur üblichen Fahrtrichtung des Fahrzeugs bei geradem Lenkeinschlag ausgerichtet sein. Alternativ oder zusätzlich kann wenigstens eine Sensoreinrichtung auch anders ausgerichtet sein.

Vorteilhafterweise kann mit der wenigstens einen Sensoreinrichtung ein horizontaler Überwachungsbereich überwacht, insbesondere abgetastet, werden. Auf diese Weise kann ein möglichst großer Bereich, insbesondere vor dem Fahrzeug, in einer entsprechend großen Breite erfasst werden. Alternativ oder zusätzlich kann wenigstens ein Überwachungsbereich eine mehr oder weniger große vertikale Erstreckung aufweisen. Auf diese Weise können unterschiedliche Höhen mit der wenigstens einen Sensoreinrichtung überwacht werden.

Erfindungsgemäß wird vor der Bestimmung der Dichte der Objektpunkte eine Ausdehnung, insbesondere eine Erstreckungsrichtung und/oder eine Form, des wenigstens einen Objekts ermittelt. Auf diese Weise kann das entsprechende Objekt besser zugeordnet werden. Insbesondere können so eventuelle Verdeckungen eines stationären Objekts, insbesondere Lücken in Leitplanken, durch ein nicht stationäres Objekt, insbesondere ein Fahrzeug, erkannt werden.

Vorteilhafterweise kann eine Entfernung des wenigstens einen Objekts von einer Fahrbahnmitte ermittelt werden. Auf diese Weise kann ein weiteres Kriterium zur Identifikation des wenigstens einen Objekts ermittelt werden.

Vorteilhafterweise können die Objektpunkte eines Objekts einem Cluster zugeordnet werden. Es kann ermittelt werden, ob eine Dichte der Objektpunkte innerhalb wenigstens eines Bereichs des Clusters unterhalb der Schwellwerts liegt.

Die wenigstens eine Sensoreinrichtung kann vorteilhafterweise mit wenigstens einer elektronischen Steuervorrichtung des Fahrzeugs, insbesondere einem Fahrerassistenzsystem und/oder einer Fahrwerksregelung und/oder einer Fahrer-Informationseinrichtung, verbunden oder Teil einer solchen sein.

Vorteilhafterweise kann die wenigstens eine Sensoreinrichtung ein scannendes System sein. Dabei kann mit Sendesignalen ein Überwachungsbereich abgetastet, also abgescannt, werden. Dazu können die entsprechenden Sendesignale, insbesondere Sendestrahlen, bezüglich ihrer Ausbreitungsrichtung über den Überwachungsbereich sozusagen geschwenkt werden.

Vorteilhafterweise kann die wenigstens eine Sensoreinrichtung ein laserbasiertes Entfernungsmesssystem sein. Das laserbasierte Entfernungsmesssystem weist als Lichtquelle wenigstens einen Laser, insbesondere einen Diodenlaser, auf. Mit dem wenigstens einen Laser können insbesondere gepulste Sendestrahlen als Sendesignale gesendet werden. Mit dem Laser können Sendesignale in für das menschliche Auge sichtbaren oder nicht sichtbaren Frequenzbereichen emittiert werden. Das laserbasierte Entfernungsmesssystem kann vorteilhafterweise ein Laserscanner sein. Mit einem Laserscanner kann ein Überwachungsbereich mit einem insbesondere gepulsten Laserstrahl abgetastet werden.

Die Erfindung wird bei einem Fahrzeug, insbesondere einem Kraftfahrzeug, verwendet. Vorteilhafterweise kann die Erfindung bei einem Landfahrzeug, insbesondere einem Personenkraftwagen, Lastkraftwagen, einem Bus, einem Motorrad oder dergleichen, verwendet werden.

Bei einer vorteilhaften Ausgestaltung des Verfahrens kann die Dichte der erfassten Objektpunkte in einem von der wenigstens einen Sensoreinrichtung abgewandten Abschnitt des wenigstens einen Objekts ermittelt werden. Je größer der Abstand der entsprechenden erfassten Objektpunkte von der wenigstens einen Sensoreinrichtung ist, desto flacher ist der Winkel, unter dem das wenigstens eine Sendesignal auf ein sich parallel zur Hauptüberwachungsrichtung erstreckende Oberfläche eines Objekts trifft. Entsprechend größer ist ein Abstand zwischen benachbarten Objektpunkten und entsprechend kleiner ist die Dichte der Objektpunkte dort. So kann insgesamt eine Genauigkeit des Verfahrens verbessert werden.

Die Dichte kann vorteilhafterweise aus einem von der wenigstens einen Sensoreinrichtung abgewandten Teil eines Clusters aus erfassten Objektpunkten ermittelt werden.

Stationäre Objekte, insbesondere Leitplanken, haben eine entsprechende große Erstreckung in Richtung der Hauptüberwachungsrichtung beziehungsweise der Fahrbahn. Auf diese Weise sind insbesondere in großen Entfernungen entsprechend große Dichteunterschiede erkennbar. Im Nahfeld, insbesondere in der Nähe der wenigstens einen Sensoreinrichtung, hingegen liegen die Objektpunkte enger beieinander, sodass hier eine Unterscheidung zwischen stationären Objekten und nicht stationären Objekten, insbesondere anderen Fahrzeugen, schwieriger sein kann.

Bei nicht stationären Objekten kann eine gleichmäßig hohe Dichteverteilung erfasst werden. Bei stationären Objekten, insbesondere in einem der Sensoreinrichtung abgewandten Abschnitt, kann eine andere Dichteverteilung für die erfassten Objektpunkte ermittelt werden als bei nicht stationären Objekten. Bei entfernten, nicht stationären Objekten, insbesondere Fahrzeugen, kann eine Seitenfläche durch ihre Rückseite verdeckt sein und daher für die wenigstens eine Sensoreinrichtung nicht erfassbar sein. Stationäre Objekte wie Leitplanken können mit ihren in der Regel etwa parallel zur Hauptüberwachungsrichtung verlaufenden Flächen auch in größerer Entfernung von der wenigstens einen Sensoreinrichtung erfasst werden können.

Bei einer erfindungsgemäßen Ausgestaltung des Verfahrens wird wenigstens eine Erstreckungsrichtung des wenigstens eines Objekts ermittelt und falls wenigstens eine Erstreckungsrichtung parallel und/oder schräg zu der Hauptüberwachungsrichtung verläuft, das wenigstens eine Objekt als stationäres Objekt kategorisiert.

Auf diese Weise wird eine Genauigkeit der Kategorisierung von Objekten verbessert. Insbesondere Leitplanken oder Fahrbahnbegrenzungen verlaufen in der Regel parallel zur Fahrbahn. Objekte, die sich senkrecht zur Fahrbahn, also senkrecht zur Hauptüberwachungsrichtung, erstrecken, werden bei diesem Verfahren zunächst nicht als stationär im Sinne der Erfindung betrachtet. Objekte, welche sich quer oder senkrecht zur Hauptüberwachungsrichtung erstrecken, sind in der Regel nicht stationär im Sinne der Erfindung, wenn davon ausgegangen wird, dass sich das Fahrzeug mit der erfindungsgemäßen Sensoreinrichtung in Fahrtrichtung mit der Hauptüberwachungsrichtung und in Fahrtrichtung entlang der Fahrbahn befindet. Auf diese Weise kann eine Eingrenzung der erfassten Objekte und Objektpunkte erfolgen.

Vorteilhafterweise kann, falls wenigstens eine Erstreckungsrichtung des wenigstens einen Objekts parallel und/oder schräg zu der Hauptüberwachungsrichtung verläuft, eine entsprechende Einschätzungsgröße erzeugt oder verändert und/oder das Verfahren mit einer weiteren Überprüfung fortgesetzt werden.

Vorteilhafterweise kann, falls wenigstens eine Erstreckungsrichtung des wenigstens einen Objekts nicht parallel und/oder schräg zu der Hauptüberwachungsrichtung, also insbesondere quer oder senkrecht zur Hauptüberwachungsrichtung, verläuft, das wenigstens eine Objekt als nicht stationäres Objekt kategorisiert werden. Vorteilhafterweise kann dann gegebenenfalls eine entsprechende gegenteilige Einschätzungsgröße erzeugt oder verändert und/oder das Verfahren beendet werden.

Vorteilhafterweise kann die Untersuchung, ob die Erstreckungsrichtung des wenigstens einen Objekts parallel und/oder schräg zur Hauptüberwachungsrichtung verläuft, vor der Ermittlung der Dichte der erfassten Objektpunkte erfolgen. In diesem Fall kann, falls die Erstreckungsrichtung nicht parallel oder schräg zur Hauptüberwachungsrichtung ist, davon ausgegangen werden, dass es sich um ein nicht stationäres Objekt handelt. Das wenigstens eine Objekt kann dann als nicht stationär kategorisiert werden. Eine weitere Überprüfung kann sich somit erübrigen. Auf diese Weise kann das Verfahren effizienter und schneller ausgeführt werden.

Alternativ oder zusätzlich kann die Ermittlung der wenigstens einen Erstreckungsrichtung nach der Ermittlung der Dichte der erfassten Objektpunkte erfolgen. In diesem Fall kann eine vorherige Kategorisierung des Objekts nochmals überprüft werden. Insgesamt kann so die Genauigkeit der Einschätzung eines räumlich stationären Objekts verbessert werden.

Bei einer weiteren vorteilhaften Ausgestaltung des Verfahrens kann wenigstens eine Erstreckungsrichtung des wenigstens eines Objekts ermittelt werden, und falls wenigstens zwei Erstreckungsrichtungen des wenigstens einen Objekts erfasst werden, die schräg, insbesondere senkrecht, zueinander verlaufen, kann das wenigstens eine Objekt als nicht stationär kategorisiert werden.

Auf diese Weise kann erfasst werden, ob das wenigstens eine Objekt eine Kante oder Ecke aufweist. Insbesondere bei einem Fahrzeug kann eine Rückseite des Fahrzeugs senkrecht zu einer Seite des Fahrzeugs verlaufen. Die Rückseite kann dann orthogonal zur Hauptüberwachungsrichtung verlaufen. Die Seiten des Fahrzeugs können parallel zur Hauptüberwachungsrichtung verlaufen. Die beiden Erstreckungsrichtungen des Fahrzeugs können als geneigt, insbesondere senkrecht, zueinander verlaufend erfasst werden. Da ein stationäres Objekt, insbesondere eine Leitplanke, in der Regel keinen derartigen Verlauf aufweist, kann davon ausgegangen werden, dass es sich um ein nicht stationäres Objekt, insbesondere ein Fahrzeug, handelt.

Vorteilhafterweise kann, falls wenigstens zwei Erstreckungsrichtungen des wenigstens einen Objekts erfasst werden, die schräg, insbesondere senkrecht, zueinander verlaufen, das Verfahren beendet werden und/oder eine entsprechende Einschätzungsgröße für ein stationäres Objekt erzeugt oder verändert werden.

Vorteilhafterweise kann, falls wenigstens zwei Erstreckungsrichtungen des wenigstens einen Objekts erfasst werden, die nicht schräg, insbesondere senkrecht, zueinander verlaufen, das wenigstens eine Objekt als nicht stationär kategorisiert und/oder das Verfahren mit einer weiteren Überprüfung fortgesetzt werden.

Vorteilhafterweise kann eine Überprüfung des wenigstens einen Objekts auf wenigstens zwei Erstreckungsrichtungen und die Ermittlung von deren Verlauf relativ zueinander durchgeführt werden, bevor eine Dichte aus der räumlichen Verteilung der Objektpunkte ermittelt wird. In diesem Fall kann, falls die wenigstens zwei Erstreckungsrichtungen schräg, insbesondere senkrecht, zueinander verlaufen, das Verfahren frühzeitig beendet werden. Dabei kann eine entsprechende Einschätzungsgröße und/oder eine Wahrscheinlichkeitsgröße für ein nicht stationäres Objekt erzeugt oder geändert werden.

Alternativ oder zusätzlich kann eine Überprüfung des wenigstens einen Objekts auf wenigstens zwei Erstreckungsrichtungen und die Ermittlung von deren Verlauf relativ zueinander durchgeführt werden, nachdem eine Dichte aus der räumlichen Verteilung der Objektpunkte ermittelt wird. In diesem Fall kann die vorherige Kategorisierung des Objekts nochmals überprüft, insbesondere bestätigt oder nicht bestätigt, gegebenenfalls widerrufen, werden. Vorteilhafterweise können hierzu entsprechende Einschätzungsgrößen und/oder Wahrscheinlichkeitsgröße erzeugt und/oder geändert werden. Insgesamt kann so eine Genauigkeit und/oder Geschwindigkeit des Verfahrens verbessert werden.

Vorteilhafterweise kann zur Ermittlung wenigstens einer Erstreckungsrichtung des wenigstens einen Objekts ein Algorithmus herangezogen werden, bei dem mehrere benachbarte Objektpunkte einem Cluster zugeordnet werden. Insbesondere kann hierzu ein so genannter Douglas-Peucker-Algorithmus verwendet werden. Dabei wird durch die geclusterten Objektpunkte eine Linie gelegt, wobei die Form der Punktwolke aus den Objektpunkten beibehalten wird. Bei der Erfassung von stationären oder nicht stationären Objekten ergibt sich dabei in der Regel entweder eine L-Form oder eine gerade Linie. Im Falle einer L-Form handelt es sich um eine Ecke oder Kante des entsprechenden Objekts. Dies kann bei einem Fahrzeug ein Übergang von einer Rückseite zu einer Seitenfläche sein. Falls bei der Erfassung der wenigstens einen Erstreckungsrichtung eine Linie ermittelt wird, so kann deren Orientierung zur Hauptüberwachungsrichtung ermittelt werden. Falls die Linie senkrecht oder nahezu senkrecht zur Hauptüberwachungsrichtung verläuft, kann von einem nicht stationären Objekt ausgegangen werden. Dies kann insbesondere der Fall sein, wenn die Rückseite eines Fahrzeugs mit der Sensoreinrichtung erfasst wird. Die Seiten des Fahrzeugs können in diesem Fall durch die Rückseite verdeckt sein und können mit der Sensoreinrichtung nicht erfasst werden. Falls die Linie parallel und/oder schräg, also nahezu parallel zur Hauptüberwachungsrichtung verläuft, kann davon ausgegangen werden, dass es sich nicht um eine Rückseite eines Fahrzeugs handelt. Es kann sich dann um ein stationäres Objekt, insbesondere eine Leitplanke, handeln. Es kann sich aber auch um ein lang gestrecktes nicht stationäres Objekt, insbesondere einen Lastkraftwagen oder einen Bus, handeln, welcher sich schräg neben dem Fahrzeug mit der Sensoreinrichtung befindet, derart, dass sich seine Rückseite außerhalb des Überwachungsbereichs der wenigstens einen Sensoreinrichtung befindet. Eine genauere Unterscheidung kann durch das erfindungsgemäße Verfahren erfolgen, bei dem zusätzlich eine Dichte der erfassten Objektpunkte in wenigstens einem Bereich des wenigstens einen Objekts ermittelt wird und mit einem vorgebbaren Schwellwert verglichen wird.

Vorteilhafterweise kann die Klassifizierung des wenigstens einen Objekts anhand der Dichte der Objektpunkte auf die Fälle beschränkt werden, bei denen der Cluster nicht bereits anhand der Orientierung der Erstreckungsrichtung klassifiziert werden kann. Dies kann etwa bei Objekten sein, bei denen lediglich eine Erstreckungsrichtung parallel und/oder schräg zur Hauptüberwachungsrichtung der wenigstens einen Sensoreinheit erfasst werden kann.

Durch die Kombination der Erfassung der Dichte der erfassten Objektpunkte und der Erfassung der Erstreckungsrichtung des Objekts aus den erfassten Objektpunkten kann eine Genauigkeit der Kategorisierung in stationäre Objekte und nicht stationäre Objekte verbessert werden. So können insbesondere auch Verdeckungen von stationären Objekten durch nicht stationäre Objekte, insbesondere durch Fahrzeuge, besser kompensiert werden.

Bei einer weiteren vorteilhaften Ausgestaltung des Verfahrens kann das Verfahren mehrmals durchgeführt werden und die dabei erfolgten Kategorisierungen können statistisch verarbeitet werden. Auf diese Weise kann eine Wahrscheinlichkeit einer entsprechenden Kategorisierung ermittelt werden. Insgesamt kann so die Genauigkeit der Kategorisierung von Objekten in stationäre und nicht stationär verbessert werden.

Vorteilhafterweise kann aus den bei den jeweiligen Verfahrensdurchläufen erzeugten Einschätzungsgrößen wenigstens eine Wahrscheinlichkeitsgröße für das Einschätzen des wenigstens einen Objekts als stationär oder nicht stationär ermittelt werden.

Vorteilhafterweise können die Einschätzungsgrößen als Zähler realisiert werden. Insbesondere kann bei der ersten Kategorisierung eines Objekts als stationär ein Anfangswert für eine Wahrscheinlichkeitsgröße realisiert werden. Bei jeder weiteren Durchführung des Verfahrens an demselben Objekt kann die Wahrscheinlichkeitsgröße abhängig von dem Ergebnis des Verfahrens mit der entsprechenden Einschätzungsgröße beziehungsweise der gegenteiligen Einschätzungsgröße verändert, insbesondere vergrößert oder verkleinert, werden. Die Wahrscheinlichkeitsgröße kann zur besseren Beurteilung des Objekts als stationär oder nicht stationär herangezogen werden.

Bei einer weiteren vorteilhaften Ausgestaltung des Verfahrens kann aus einem Zusammenhang zwischen den Sendesignalen und den Empfangssignalen eine Relativgeschwindigkeit des wenigstens einen Objekts zu dem Fahrzeug ermittelt werden, und falls die Relativgeschwindigkeit in der Größenordnung von etwa 0 m/s liegt, eine Kategorisierung des wenigstens einen Objekts auf Basis der Dichte der Objektpunkte und/oder der Erstreckungsrichtung des wenigstens einen Objekts durchgeführt werden, andernfalls kann keine weitere Kategorisierung erfolgen. Auf diese Weise kann ein weiteres Kriterium zur Beurteilung des Objekts als stationär oder nicht stationär realisiert werden. Falls die Relativgeschwindigkeit in der Größenordnung von etwa 0 m/s liegt, bewegt sich das Objekt mit der gleichen Geschwindigkeit wie das Fahrzeug mit der wenigstens einen Sensoreinrichtung oder es handelt sich um ein sich parallel zum Weg des Fahrzeugs erstreckendes stationäres Objekt, insbesondere eine Leitplanke. Durch die Hinzuziehung wenigstens einer weiteren Kategorisierung auf Basis der Dichte der Objektpunkte und/oder der Erstreckungsrichtung des wenigstens einen Objekts kann so ein mit gleicher Geschwindigkeit parallel fahrendes Fahrzeug von einem stationären Objekt, insbesondere einer Leitplanke, unterschieden werden. Falls das Objekt mit einer Relativgeschwindigkeit erfasst wird, welche entgegengesetzt ist zur Absolutgeschwindigkeit des Fahrzeugs mit der wenigstens einen Sensoreinrichtung, kann davon aus gegangen werden, dass es sich um ein stehendes nicht stationäres Objekt oder ein stationäres Objekt handelt. Auf eine weitere Kategorisierung kann verzichtet werden, falls das Objekt für den weiteren Fahrverlauf des Fahrzeugs mit der wenigstens einen Sensoreinrichtung nicht von Relevanz ist. Insgesamt kann so die Überwachung beschleunigt und effizient ausgeführt werden.

Bei einer weiteren vorteilhaften Ausgestaltung des Verfahrens kann eine Entfernung und/oder eine Relativgeschwindigkeit wenigstens eines Objektpunktes des wenigstens einen Objekts nach einem abtastenden Lichtlaufzeitmessverfahren, insbesondere einem LiDAR-Verfahren oder LaDAR-Verfahren, ermittelt werden. Mit einem abtastenden Verfahren kann einfach eine Winkelauflösung erreicht werden. Mit Lichtlaufzeitmessungen können sehr genau Entfernungen und/oder Relativgeschwindigkeiten bestimmt werden.

Ferner wird die Aufgabe erfindungsgemäß mit der Vorrichtung dadurch gelöst, dass das wenigstens eine Kategorisierungsteil wenigstens eine Dichteermittlungseinrichtung zum Ermitteln wenigstens einer räumlichen Dichte der erfassten Objektpunkte in wenigstens einem Bereich des wenigstens einen Objekts und wenigstens eine Vergleichseinrichtung zum Vergleichen der Dichte mit einem vorgegebenen oder vorgebbaren Schwellwert und zur Kategorisierung des wenigstens einen Objekts als stationär oder nicht stationär abhängig von dem Ergebnis des Vergleiches aufweist.

Vorteilhafterweise kann das wenigstens eine Auswerteteil wenigstens eine elektronische Schaltung sein oder aufweisen. Vorteilhafterweise kann das wenigstens eine Auswerteteil wenigstens einen Prozessor aufweisen, mit dem das Verfahren ausgeführt werden kann.

Außerdem wird die Aufgabe erfindungsgemäß mit der Sensoreinrichtung dadurch gelöst, dass das wenigstens eine Kategorisierungsteil wenigstens eine Dichteermittlungseinrichtung zum Ermitteln wenigstens einer räumlichen Dichte der erfassten Objektpunkte in wenigstens einem Bereich des wenigstens einen Objekts und wenigstens eine Vergleichseinrichtung zum Vergleichen der Dichte mit einem vorgegebenen oder vorgebbaren Schwellwert und zur Kategorisierung des wenigstens einen Objekts als stationär oder nicht stationär abhängig von dem Ergebnis des Vergleiches aufweist.

Des Weiteren wird die Aufgabe erfindungsgemäß mit dem Fahrerassistenzsystem dadurch gelöst, dass das wenigstens eine Kategorisierungsteil wenigstens eine Dichteermittlungseinrichtung zum Ermitteln wenigstens einer räumlichen Dichte der erfassten Objektpunkte in wenigstens einem Bereich des wenigstens einen Objekts und wenigstens eine Vergleichseinrichtung zum Vergleichen der Dichte mit einem vorgegebenen oder vorgebbaren Schwellwert und zur Kategorisierung des wenigstens einen Objekts als stationär oder nicht stationär abhängig von dem Ergebnis des Vergleiches aufweist.

Im Übrigen gelten die im Zusammenhang mit dem erfindungsgemäßen Verfahren, der erfindungsgemäßen Vorrichtung, der erfindungsgemäßen Sensoreinrichtung und dem erfindungsgemäßen Fahrerassistenzsystem und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Frontansicht eines Kraftfahrzeugs mit einer Sensoreinrichtung zur Erfassung von Objekten, welche Teil einer Fahrerassistenzsystem des Fahrzeugs ist;
- Figur 2: ein Szenario einer Fahrsituation des hier lediglich schematisch angedeuteten Kraftfahrzeugs aus der Figur 1 auf einer Straße mit einer Leitplanke und einem vorausfahrenden anderen Fahrzeug;
- Figur 3: ein Szenario ähnlich dem Szenario aus der Figur 2, wobei die mit der Sensoreinrichtung erfassten Objektpunkte von Leitplanken und vorausfahrenden Fahrzeugen jeweils als Kreuze dargestellt sind;
- Figur 4: eine vergrößerte Ansicht eines Szenarios mit der Darstellung von Objektpunkten ähnlich zu dem Szenario aus der Figur 3;
- Figur 5: eine Detailansicht eines Szenarios ähnlich zu den Szenarien aus den Figuren 3 und 4, mit der Darstellung von Objektpunkten eines vorausfahrenden Fahrzeugs;
- Figur 6: eine Detailansicht eines Szenarios ähnlich zu den Szenarien aus den Figuren 3 bis 5, mit dem Objektpunkten einer Leitplanke;
- Figur 7: ein Ablaufdiagramm eines Kategorisierungsverfahrens zur Unterscheidung von stationären Objekten wie Leitplanken von nicht stationären Objekten wie vorausfahrenden Fahrzeugen, das mit der Sensoreinrichtung des Fahrzeugs aus den Figuren 1 und 2 bei Szenarien ähnlich denen aus den Figuren 3 bis 6 durchgeführt wird.

In den Figuren sind gleiche Bauteile mit gleichen Bezugszeichen versehen.

### Ausführungsform(en) der Erfindung

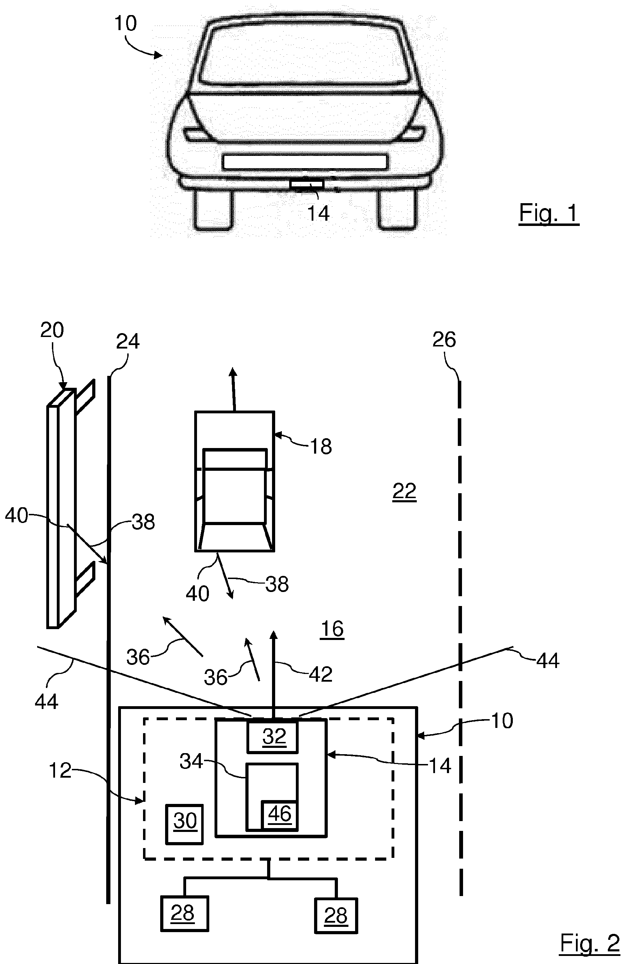

In Figur 1 ist ein Kraftfahrzeug 10 in Form eines Personenkraftwagens in der Vorderansicht gezeigt. Das Kraftfahrzeug 10 verfügt über ein in der Figur 2 angedeutetes Fahrerassistenzsystem 12 mit einer Sensoreinrichtung 14. Die Sensoreinrichtung 14 befindet sich beispielhaft in einer vorderen Stoßstange des Kraftfahrzeugs 10. Das Fahrerassistenzsystem 12 dient zur Unterstützung eines Fahrers bei einer Steuerung von Fahrfunktionen des Kraftfahrzeugs 10, beispielsweise der Geschwindigkeit, einer Bremsfunktion oder einer Lenkung.

Mit der Sensoreinrichtung 14 kann ein Überwachungsbereich 16 in einer Fahrtrichtung des Kraftfahrzeugs 10 vor dem Kraftfahrzeug 10 auf Objekte, beispielsweise vorausfahrende Fahrzeuge 18 oder Leitplanken 20, hin überwacht werden. Die Sensoreinrichtung 14 ist für die Verfolgung, dem so genannten Tracking, von Objekten ausgestaltet. Dabei werden die Objekte mit der wenigstens einen Sensoreinrichtung erfasst und deren zeitliches Verhalten, beispielsweise ihre Entfernung und/oder ihre Relativgeschwindigkeit bezüglich des Kraftfahrzeugs 10, verfolgt.

Bei den Objekten wird zwischen stationären Objekten und nicht stationären Objekten unterschieden. Stationäre Objekte, wie beispielsweise die Leitplanken 20, sind fest und unbeweglich an einem Fahrweg für das Kraftfahrzeug 10, beispielsweise einer in der Figur 2 angedeuteten Straße 22, angeordnet. Stationäre Objekte können auch als statische Objekte bezeichnet werden. Nicht stationäre Objekte, beispielsweise andere Fahrzeuge 18, sind relativ zur Straße 22 beweglich. Nicht stationäre Objekte können dabei stehen oder sich relativ zur Straße 22 und/oder mit einer Relativgeschwindigkeit zum Kraftfahrzeug 10 bewegen. Nichtstationäre Objekte können auch als dynamische Objekte bezeichnet werden.

In der Figur 2 ist beispielhaft ein Szenario einer Fahrsituation des Kraftfahrzeugs 10 auf der Straße 22 in der Draufsicht schematisch gezeigt. Dabei ist das Kraftfahrzeug 10 lediglich schematisch und nicht maßstabsgetreu angedeutet. Eine Seitenlinie 24 der Straße 22 ist als Strich und eine Mittellinie 26 als gestrichelte Linie angedeutet.

Das Fahrerassistenzsystem 12 ist, wie in der Figur 2 angedeutet, funktional beispielhaft mit zwei Funktionseinrichtungen 28 des Kraftfahrzeugs 10 verbunden. Bei den Funktionseinrichtung 28 kann es sich beispielsweise um eine Motorsteuerung, eine Lenkungssteuerung oder ein Bremssystem handeln. Ferner kann eine der Funktionseinrichtungen 28 eine Ausgabeeinrichtung zur Ausgabe eines optischen und/oder akustischen Warnsignals oder Hinweissignals für den Fahrer umfassen.

Das Fahrerassistenzsystem 12 weist eine elektronische Einrichtung 30 auf. Mit der elektronischen Einrichtung 30 werden Informationen der Sensoreinrichtung 14 verarbeitet und in entsprechende Steuer- oder Signalinformationen für die Funktionseinrichtungen 28 umgewandelt.

Das Fahrerassistenzsystem 12 umfasst beispielhaft eine Sensoreinrichtung 14. Zusätzlich oder alternativ zu der Sensoreinrichtung 14 in der Stoßstange des Kraftfahrzeugs 10 können auch weitere Sensoreinrichtungen 14 an anderen Stellen des Kraftfahrzeugs 10, beispielsweise an der Seite oder an der Rückseite, angeordnet sein.

Die Sensoreinrichtung 14 ist beispielhaft als scannendes LaDAR-System ausgestaltet. Die Sensoreinrichtung 14 umfasst ein Optikteil 32 und ein elektronisches Auswerteteil 34. Das Optikteil 34 umfasst einen der besseren Übersichtlichkeit nicht gezeigten Sender in Form einer Laserdiode und einen ebenfalls nicht gezeigten Empfänger in Form einer Empfangsdiode.

Das Optikteil 32 verfügt ferner über eine nicht gezeigte Umlenkspiegeleinrichtung. Mit der Umlenkspiegeleinrichtung wird ein gepulster Sendestrahl 36, welcher mit dem Sender erzeugt wird, abhängig von der Winkelstellung der Umlenkspiegeleinrichtung winkelabhängig in den Überwachungsbereich 16 gesendet. Darüber hinaus werden mit der Umlenkspiegeleinrichtung von einem Objekt, beispielsweise dem Fahrzeug 18 oder der Leitplanke 20, reflektierte Empfangsstrahlen 38 auf die Empfangsdiode umgelenkt.

Die Sensoreinrichtung 14 arbeitet nach einem Lichtlaufzeitmessverfahren. Dabei wird eine Zeit zwischen dem Aussenden eines Sendestrahls 36 und dem Empfang des entsprechenden Empfangsstrahls 38 bestimmt und daraus eine Entfernung des entsprechenden Objekts von der Sensoreinrichtung 14 ermittelt. Ferner kann mit der Sensoreinrichtung 14 die Relativgeschwindigkeit des entsprechenden Objekts, beispielsweise des vorausfahrenden Fahrzeugs 18, relativ zum Kraftfahrzeug 10 ermittelt werden.

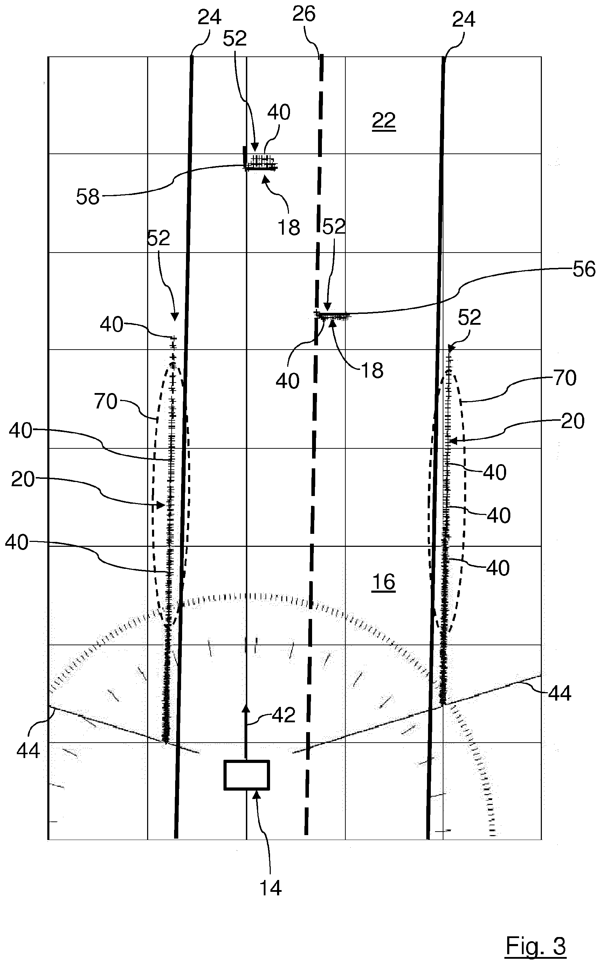

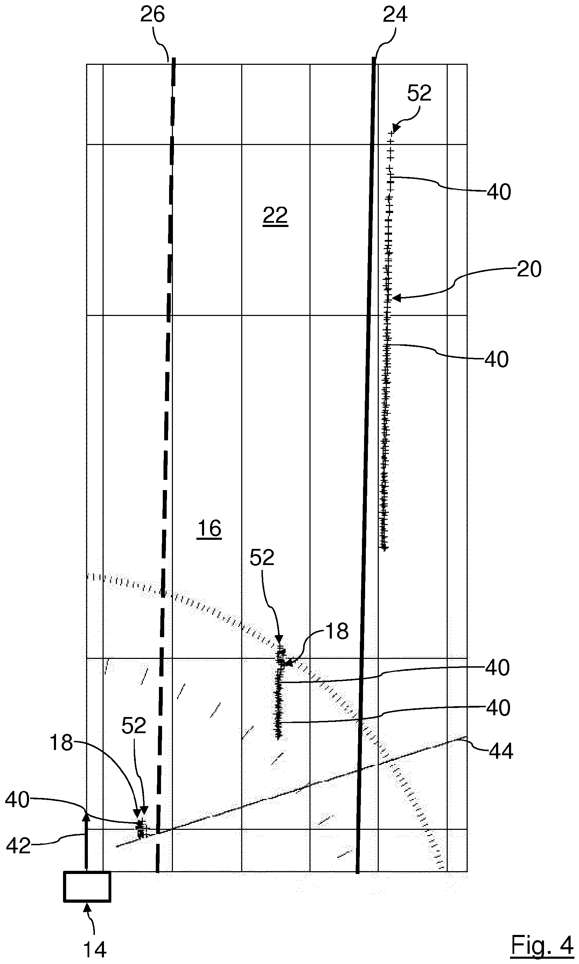

Beim Betrieb der Sensoreinrichtung 14 wird die Umlenkspiegeleinrichtung in Abstimmung mit dem Sender in horizontaler Richtung bewegt, beispielsweise gedreht. Auf diese Weise wird der Sendestrahl 36 in der Horizontalen, in der Figur 2 in der Draufsicht beispielsweise von links nach rechts oder von rechts nach links geschwenkt. So wird mit dem pulsierenden Sendestrahl 36 das entsprechende Objekt in nebeneinanderliegenden Objektpunkten 40, in welchen der Sendestrahl 36 reflektiert wird und als Empfangsstrahl 38 zurückgesendet wird, winkelabhängig abgetastet. Beispielhaft sind in den Figuren 3 bis 6 erfasste Objektpunkte 40 in Szenarien ähnlich dem Szenario aus Figur 2 jeweils als Kreuze angedeutet.

Eine Hauptüberwachungsrichtung 42 der Sensoreinrichtung 14 ist in der Figur 2 mit einem Pfeil angedeutet. Beispielhaft verläuft die Hauptüberwachungsrichtung 42 in Richtung der Fahrtrichtung des Kraftfahrzeugs 10. Bei einer Kurvenfahrt kann die Fahrtrichtung des Kraftfahrzeugs 10 von der Hauptüberwachungsrichtung 42 abweichen. Die seitlichen Grenzen 44 des Überwachungsbereichs 16 sind in den Figuren 2 bis 6 als Linien angedeutet. Der Überwachungsbereich 16 ist beispielhaft symmetrisch zur Hauptüberwachungsrichtung 42. Der Überwachungsbereich 16 kann auch unsymmetrisch sein, was für die Erfindung allerdings nicht wesentlich ist. Beispielhaft ist der Überwachungsbereich 16 eben und verläuft horizontal. Je nach Ausgestaltung der Sensoreinrichtung 14 kann der Überwachungsbereich 16 zusätzlich eine mehr oder weniger große vertikale Ausdehnung aufweisen. Die Ebene des Überwachungsbereichs 16 kann auch schräg zur Horizontalen verlaufen.

Mit dem Auswerteteil 34 werden von dem Optikteil 32 erfasste Empfangsstrahlen ausgewertet und daraus die Entfernung und die Relativgeschwindigkeit des entsprechenden Objekts zu dem Kraftfahrzeug 10 ermittelt.

Das Auswerteteil 34 verfügt ferner über eine elektronische Kategorisierungsvorrichtung 46, mit der die erfassten Objekte in stationäre Objekte und nicht stationäre Objekte kategorisiert werden können. Stationäre Objekte, welche sich parallel zur Straße 22 erstrecken, wie beispielsweise die Leitplanken 20, können unter Umständen nicht in Gänze von der Sensoreinrichtung 14 erfasst werden. Bei dem Tracking kann es vorkommen, dass unterschiedliche Teilabschnitte eines solchen stationären Objekts erfasst werden, welche sich scheinbar mit dem Kraftfahrzeug 10 mitbewegen. Dies kann dazu führen, dass das betreffende stationäre Objekt fälschlicherweise als nicht stationär kategorisiert wird. Zur Unterscheidung der stationären Objekte von den nicht stationären Objekten wird mit der elektronischen Kategorisierungsvorrichtung 46 daher ein Kategorisierungsverfahren 48 ausgeführt, mit dem derartige Fehler bei der Kategorisierung vermieden werden können. Je genauer die Kategorisierung der Objekte ist, umso besser kann die Funktion des Fahrerassistenzsystems ausgeführt werden. Die Kategorisierungsvorrichtung 46 kann beispielsweise als Prozessor mit einem Algorithmus ausgestaltet sein, mit dem das Kategorisierungsverfahren 48 ausgeführt wird.

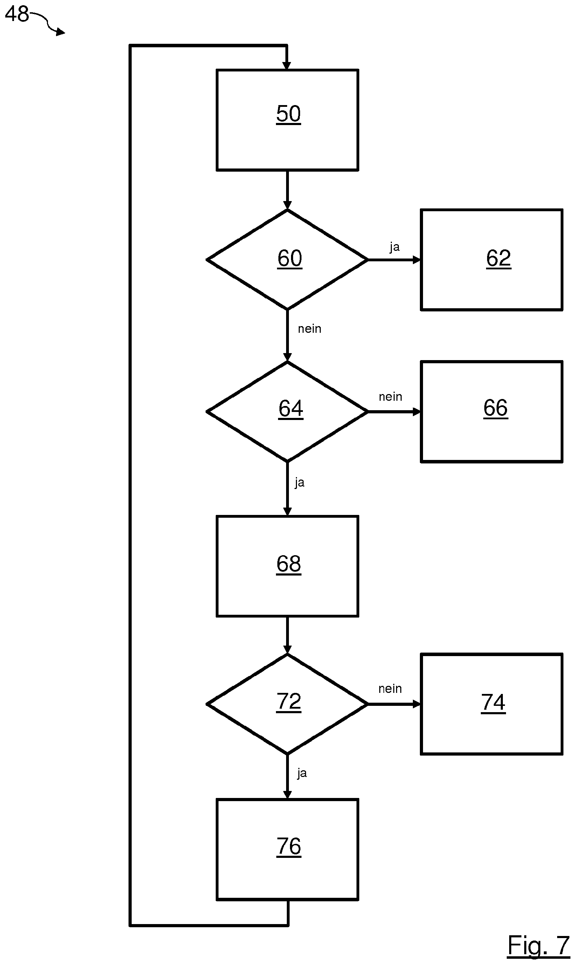

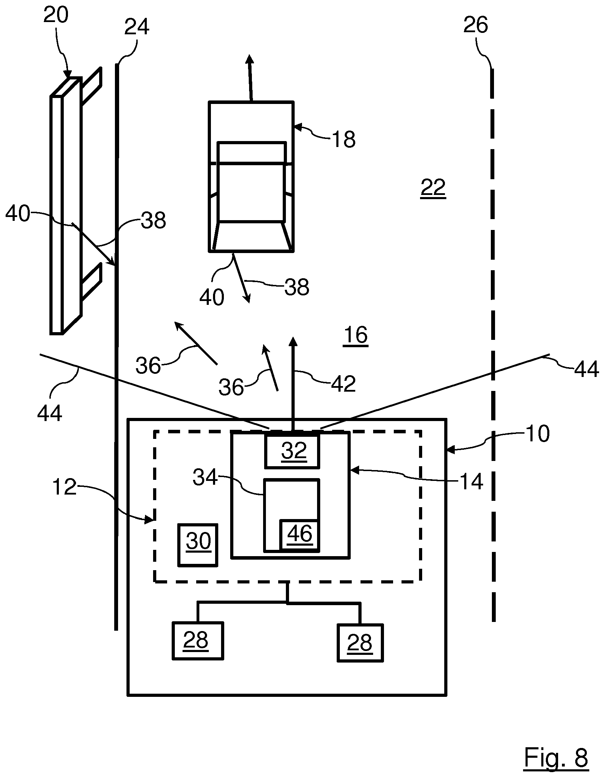

Das Kategorisierungsverfahren 48 ist als Ablaufdiagramm in der Figur 7 dargestellt.

In einem Schritt 50 wird die Geometrie eines Objekts, beispielsweise eines Fahrzeugs 18 oder einer Leitplanke 20, erfasst. Hierzu werden benachbarte Objektpunkte 40 des Objekts 18 oder 20 einem Cluster 52 zugeordnet. Der Cluster 52 wird anschließend beispielsweise mithilfe eines Douglas-Peucker-Algorithmus analysiert. Dabei wird eine Linie 54, 56 oder 58 durch den Cluster 52 gelegt. Eine Erstreckungsrichtung des entsprechenden Objekts 18 oder 20 wird durch die jeweiligen Objektpunkte 40 aufgespannt und durch die entsprechende Linie 54, 56 oder 58 dargestellt.

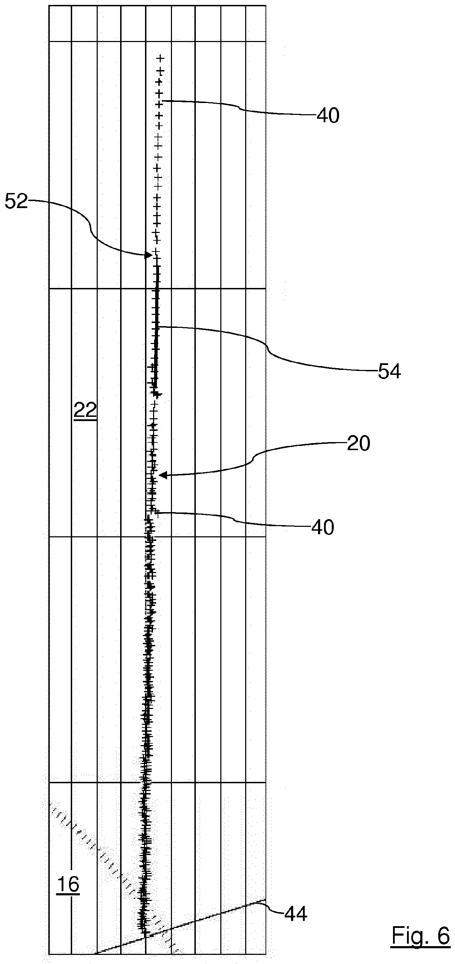

Gehört der Cluster 52 zu einer Leitplanke 20 entsteht eine nahezu gerade Linie 54. Die Erstreckungsrichtung der Linie 54 verläuft etwa parallel zur Hauptüberwachungsrichtung 42. In der Figur 6 ist beispielhaft ein Teil einer derartigen Linie 54 angedeutet.

Gehört der Cluster 52 zu der Rückseite eines Fahrzeugs 18, so verläuft eine entsprechende, in Figur 3 angedeutete, Linie 56 orthogonal zur Hauptüberwachungsrichtung 42.

Bei einem Fahrzeug 18, welches schräg vor dem Kraftfahrzeug 10 fährt und bei dem sowohl die Rückseite als auch die Seitenflächen im Überwachungsbereich 16 der Sensoreinrichtung 14 liegen, entsteht so eine, in der Figur 3 angedeutete, L-förmige Linie 58. Die entsprechenden Erstreckungsrichtungen, also die Schenkel der L-Form, der Linie 58 verlaufen senkrecht zueinander.

In einem Schritt 60 des Kategorisierungsverfahrens 48 wird geprüft, ob die Linie des Objekts 18 oder 20 eine L-Form ausweist. Ist dies wie bei der Linie 58 der Fall, so wird davon ausgegangen, dass es sich um ein nicht stationäres Objekt, beispielsweise ein anderes Fahrzeug 18, handelt. Das Verfahren wird mit einem Schritt 62 beendet. Gegebenenfalls wird das Verfahren zu einem späteren Zeitpunkt mit neuen Datensätzen erneut durchgeführt.

Hat die Linie des Objekts 18 oder 20 keine L-Form, wie dies bei den Linien 54 und 56 der Fall ist, so wird in einem Schritt 64 geprüft, ob die Linie des Objekts 18 oder 20 etwa parallel zur Hauptüberwachungsrichtung 42 verläuft. Verläuft die Linie, wie die Linie 56, nicht parallel zur Hauptüberwachungsrichtung 42, so wird davon ausgegangen, dass es sich um ein nicht stationäres Objekt, beispielsweise ein Fahrzeug 20, handelt. Das Verfahren wird mit einem Schritt 66 beendet. Gegebenenfalls wird das Verfahren zu einem späteren Zeitpunkt mit neuen Datensätzen erneut durchgeführt.

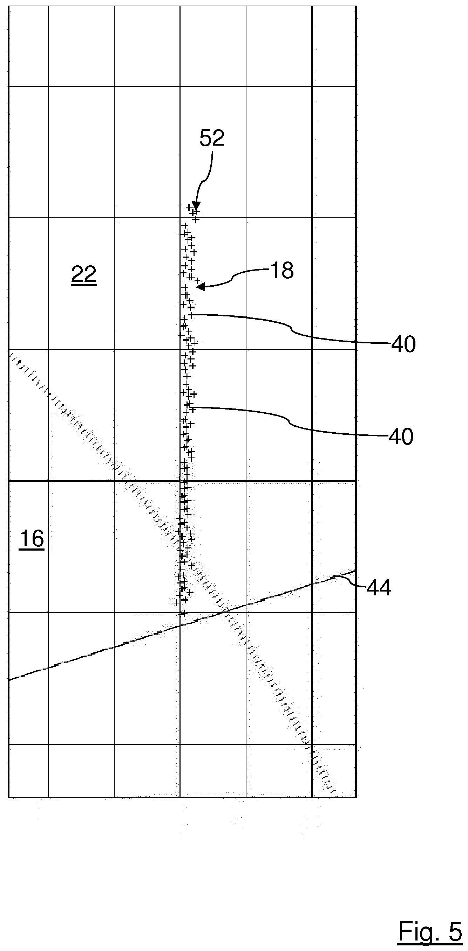

Verläuft hingegen die Linie des Objekts 18 oder 20, wie die Linie 54, parallel zur Hauptüberwachungsrichtung 42, so wird in einem Schritt 68 mit einer Dichteermittlungseinrichtung der Kategorisierungsvorrichtung 46 eine Dichte der entsprechenden Objektpunkte 40 in einem von der Sensoreinrichtung 14 entfernten Bereich 70 des Objekts 20 ermittelt. Der Bereich 70 ist in der Figur 3 durch entsprechende gestrichelte Ellipsen angedeutet. In der Figur 6 ist eine Detailansicht der Leitplanke 20 gezeigt. Eine Dichte der entsprechenden Objektpunkte 40 nimmt mit zunehmender Entfernung zu der Sensoreinrichtung 14 deutlich ab. Im Unterschied dazu ist eine Dichte der Objektpunkte 40 bei einem Fahrzeug 18, wie in der Figur 5 im Detail gezeigt, nahezu konstant.

In einem Schritt 72 wird mit einer Vergleichseinrichtung der Kategorisierungsvorrichtung 46 die ermittelte Dichte mit einem vorgegebenen Schwellwert verglichen. Der Schwellwert kann beispielsweise werkseitig empirisch bestimmt und in einer entsprechenden Speichervorrichtung abgelegt werden. Alternativ oder zusätzlich kann der Schwellwert nach einem hier nicht weiter interessierenden dynamischen Verfahren beim Betrieb der Sensoreinrichtung 14 ermittelt werden.

Ergibt der Vergleich im Schritt 72, dass die ermittelte Dichte größer als der oder gleich dem Schwellwert ist, so wird davon ausgegangen, dass es sich ein nicht stationäres Objekt, beispielsweise ein Fahrzeug 18, handelt. Das Verfahren wird mit einem Schritt 74 beendet. Gegebenenfalls wird das Verfahren zu einem späteren Zeitpunkt mit neuen Datensätzen erneut durchgeführt.

Ergibt der Vergleich in Schritt 72, dass die Dichte kleiner als der Schwellwert ist, so wird, davon ausgegangen, dass es sich um ein stationäres Objekt, vorliegend eine Leitplanke 20, handelt.

Falls das entsprechende Objekt 20 erstmals als stationär kategorisiert wird, wird in einem Schritt 76 eine erste Wahrscheinlichkeitsgröße mit einem Wert, beispielsweise 5, versehen. Falls das Objekt 20 nach einem vorhergehenden Durchlauf des Kategorisierungsverfahrens 48 bereits als stationär kategorisiert wurde und bereits eine Wahrscheinlichkeitsgröße vorliegt, wird diese Wahrscheinlichkeitsgröße um den Wert einer Einschätzungsgröße, beispielsweise 1, erhöht. Mit der Einschätzungsgröße wird charakterisiert, dass das Objekt 18 bei dem letzten Durchlauf des Kategorisierungsverfahrens 48 als stationär kategorisiert wurde. Mit der Wahrscheinlichkeitsgröße werden die Einschätzungsgrößen mehrerer Durchläufe des Kategorisierungsverfahrens 48 statistisch erfasst und so die Genauigkeit erhöht.

Anschließend wird das Kategorisierungsverfahren 48 ab dem Schritt 50 für dasselbe Objekt 20 erneut durchgeführt.

Optional kann in den Schritten 62, 66 und 74 vor Beendigung des Kategorisierungsverfahrens 48 gegebenenfalls die in dem Schritt 76 eines vorherigen Durchlauf des Kategorisierungsverfahrens 48 erzeugte Wahrscheinlichkeitsgröße um eine entsprechende Einschätzungsgröße, beispielsweise 1, verringert werden oder um eine entsprechende gegenteilige Einschätzungsgröße, beispielsweise -1, erhöht werden. So wird eine Genauigkeit der Wahrscheinlichkeitsgröße weiter verbessert.

Die in dem Schritt 70 sukzessive entstehende Wahrscheinlichkeitsgröße wird der elektronischen Einrichtung 30 des Fahrerassistenzsystems 12 zugeführt und dort der Steuerung der entsprechenden Funktionseinrichtungen 28 zugrunde gelegt.

Optional kann bei dem Kategorisierungsverfahren 48 die Relativgeschwindigkeit des entsprechenden Objekts 18 relativ zu dem Kraftfahrzeug 10 zur Unterscheidung von stationären und nicht stationären Objekten hinzugezogen werden. Falls die Relativgeschwindigkeit in der Größenordnung von etwa 0 m/s liegt, so ist dies ein weiteres Anzeichen dafür, dass es sich um ein stationäres Objekt beispielsweise in Form einer Leitplanke 20 handelt. Dies kann zur Einschätzung der Wahrscheinlichkeit, dass es sich tatsächlich um ein stationäres Objekt handelt, herangezogen werden. Beispielsweise kann in diesem Fall eine weitere Einschätzungsgröße, beispielsweise 1, zu der Wahrscheinlichkeitsgröße addiert werden. Auf diese Weise können beispielsweise Verdeckungen eines stationären Objekts durch ein nicht stationäres Objekt, beispielsweise einen Lastkraftwagen oder einen Bus, kompensiert werden.

Zusätzlich oder alternativ zu der Vorgabe von Wahrscheinlichkeitsgröße und dem entsprechenden addieren und subtrahieren von Einschätzungsgrößen können auch andere Methoden zur Charakterisierung und statistischen Verarbeitung von Ergebnissen des Kategorisierungsverfahren 48 und der Einschätzung, ob es sich bei dem getrackten Objekt um ein stationäres oder nicht stationäres handelt, verwendet werden.

## Patentansprüche

1. Verfahren (48) zur optischen Erfassung von wenigstens einem Objekt (18, 20) mit wenigstens einer Sensoreinrichtung (14) eines Fahrzeugs (10), bei dem mit der wenigstens einen Sensoreinrichtung (14) optische Sendesignale (36) in einen Überwachungsbereich (16) gesendet werden und von Objektpunkten (40) des wenigstens einen Objekts (18, 20) reflektierte Sendesignale (36) als Empfangssignale (38) winkelaufgelöst bezüglich einer Hauptüberwachungsrichtung (42) der wenigstens einen Sensoreinrichtung (14) erfasst werden, und aus einem Zusammenhang zwischen den Sendesignalen (36) und den Empfangssignalen (38) eine räumliche Verteilung der Objektpunkte (40) des wenigstens einen Objekts (18, 20) relativ zu der wenigstens einen Sensoreinrichtung (14) ermittelt wird und das wenigstens eine Objekt (18, 20) als stationär oder nicht stationär kategorisiert wird, **dadurch gekennzeichnet, dass** wenigstens eine Erstreckungsrichtung (54, 56, 58) des wenigstens einen Objekts (18, 20) ermittelt wird und falls die wenigstens eine Erstreckungsrichtung (54) parallel und/oder schräg zu der Hauptüberwachungsrichtung (42) verläuft, eine räumliche Dichte der erfassten Objektpunkte (40) in wenigstens einem Bereich (70) des wenigstens einen Objekts (20) ermittelt wird und falls die Dichte der erfassten Objektpunkte (40) kleiner ist als ein vorgebbarer oder vorgegebener Schwellwert, das wenigstens eine Objekt (20) als stationär kategorisiert wird.

2. Verfahren nach Anspruch 1, **dadurch gekennzeichnet, dass** die Dichte der erfassten Objektpunkte (40) in einem von der wenigstens einen Sensoreinrichtung (14) abgewandten Abschnitt (70) des wenigstens einen Objekts (20) ermittelt wird.

3. Verfahren nach einem der vorigen Ansprüche, **dadurch gekennzeichnet, dass** wenigstens eine Erstreckungsrichtung (54, 56, 58) des wenigstens einen Objekts (18, 20) ermittelt wird und falls wenigstens zwei Erstreckungsrichtungen (58) des wenigstens einen Objekts (18) erfasst werden, die schräg, insbesondere senkrecht, zueinander verlaufen, das wenigstens eine Objekt (18) als nicht stationär kategorisiert wird.

4. Verfahren nach einem der vorigen Ansprüche, **dadurch gekennzeichnet, dass** das Verfahren (48) mehrmals durchgeführt wird und die dabei erfolgten Kategorisierungen statistisch verarbeitet werden.

5. Verfahren nach einem der vorigen Ansprüche, **dadurch gekennzeichnet, dass** aus einem Zusammenhang zwischen den Sendesignalen (36) und den Empfangssignalen (38) eine Relativgeschwindigkeit des wenigstens einen Objekts (18, 20) zu dem Fahrzeug (10) ermittelt wird und falls die Relativgeschwindigkeit in der Größenordnung von etwa 0 m/s liegt, eine Kategorisierung des wenigstens einen Objekts (18, 20) auf Basis der Dichte der Objektpunkte (40) und/oder der Erstreckungsrichtung (54, 56, 58) des wenigstens einen Objekts (18, 20) durchgeführt wird, andernfalls keine weitere Kategorisierung erfolgt.

6. Verfahren nach einem der vorigen Ansprüche, **dadurch gekennzeichnet, dass** eine Entfernung und/oder eine Relativgeschwindigkeit wenigstens eines Objektpunktes (40) des wenigstens einen Objekts (18, 20) nach einem abtastenden Lichtlaufzeitmessverfahren ermittelt wird.

7. Vorrichtung (34) einer optischen Sensoreinrichtung (14) eines Fahrzeugs (10) zur optischen Erfassung von wenigstens einem Objekt (18, 20) mit wenigstens einem Auswerteteil (34) zum Ermitteln wenigstens einer Winkelauflösung von Ausbreitungsrichtungen von Sendesignalen (36) und/oder Empfangssignalen (38) bezüglich einer Hauptüberwachungsrichtung (42) der wenigstens einen Sensoreinrichtung (14) und zur Ermittlung einer räumlichen Verteilung von Objektpunkten (40) des wenigstens einen Objekts (18, 20), an denen die Sendesignale (36) reflektiert und als Empfangssignale (38) zur Sensoreinrichtung (14) zurückgesendet werden, relativ zu der wenigstens einen Sensoreinrichtung (14) aus einem Zusammenhang zwischen den Sendesignalen (36) und den Empfangssignalen (38), wobei die Vorrichtung (34) wenigstens ein Kategorisierungsteil (46) aufweist zur Kategorisierung des wenigstens einen Objekts (18, 20) als stationär oder nicht stationär, **dadurch gekennzeichnet, dass** das wenigstens eine Kategorisierungsteil (46) dazu ausgelegt ist wenigstens eine Erstreckungsrichtung (54, 56, 58) des wenigstens einen Objekts (18, 20) zu ermitteln und falls die wenigstens eine Erstreckungsrichtung (54) parallel und/oder schräg zu der Hauptüberwachungsrichtung (42) verläuft, wenigstens eine Dichteermittlungseinrichtung des wenigstens einen Kategorisierungsteils (46) dazu ausgelegt ist wenigstens eine räumliche Dichte der erfassten Objektpunkte (40) in wenigstens einem Bereich (70) des wenigstens einen Objekts (18, 20) zu ermitteln und wenigstens eine Vergleichseinrichtung des wenigstens einen Kategorisierungsteils (46) zum Vergleichen der Dichte mit einem vorgegebenen oder vorgebbaren Schwellwert und zur Kategorisierung des wenigstens einen Objekts (18, 20) als stationär oder nicht stationär abhängig von dem Ergebnis des Vergleiches ausgelegt ist.

8. Sensoreinrichtung (14) eines Fahrzeugs (10) mit wenigstens einer Vorrichtung (34) nach Anspruch 7 zur optischen Erfassung von wenigstens einem Objekt (18, 20) mit wenigstens einem Sender zur Aussendung von optischen Sendesignalen (36) in einen Überwachungsbereich (16) und wenigstens einem Empfänger zur Erfassung von an Objektpunkten (40) des wenigstens einen Objekts (18, 20) reflektierten Sendesignalen (36) als Empfangssignale (38).

9. Fahrerassistenzsystem (12) eines Fahrzeugs (10) mit wenigstens einer Sensoreinrichtung (14) nach Anspruch 8.

## Claims

1. Method (40) for optically capturing at least one object (18, 20) using at least one sensor device (14) of a vehicle (10), in which optical transmission signals (36) are transmitted into a monitored region (16) using at least one sensor device (14) and transmission signals (36) reflected by object points (40) of the at least one object (18, 20) are captured as reception signals (38) in angle-resolved fashion with respect to a main monitored direction (42) of the at least one sensor device (14) and a spatial distribution of the object points (40) of the at least one object (18, 20) are ascertained relative to the at least one sensor device (14) from a relationship between the transmission signals (36) and the reception signals (38) and the at least one object (18, 20) is characterized as stationary or non-stationary, **characterized in that** at least one direction of extent (54, 56, 58) of the at least one object (18, 20) is ascertained and, should the at least one direction of extent (54) extend parallel and/or obliquely with respect to the main monitored direction (42), a spatial density of the captured object points (40) is ascertained in at least one region (70) of the at least one object (20) and the at least one object (20) is categorized as stationary should the density of the captured object points (40) be less than a predeterminable or predetermined threshold.

2. Method according to Claim 1, **characterized in that** the density of the captured object points (40) is ascertained in a section (70) of the at least one object (20) facing away from the at least one sensor device (14).

3. Method according to either of the preceding claims, **characterized in that** at least one direction of extent (54, 56, 58) of the at least one object (18, 20) is ascertained and, should at least two directions of extent (58) of the at least one object (18) that extend obliquely, in particular perpendicular, to one another be captured, the at least one object (18) is categorized as non-stationary.

4. Method according to any one of the preceding claims, **characterized in that** the method (48) is carried out a plurality of times and the categorizations resulting therefrom are processed statistically.

5. Method according to any one of the preceding claims, **characterized in that** a relative speed of the at least one object (18, 20) to the vehicle (10) is ascertained from a relationship between the transmission signals (36) and the reception signals (38) and, should the relative speed be of the order of approximately 0 m/s, the categorization of the at least one object (18, 20) is carried out on the basis of the density of the object points (40) and/or the direction of extent (54, 56, 58) of the at least one object (18, 20); otherwise, no further categorization is carried out.

6. Method according to any one of the preceding claims, **characterized in that** a distance and/or relative speed of the at least one object point (40) of the at least one object (18, 20) is ascertained according to a sampling light time-of-flight measurement method.

7. Apparatus (34) of an optical sensor device (14) of a vehicle (10) for optically capturing at least one object (18, 20) with at least one evaluation part (34) for ascertaining at least one angular resolution of directions of propagation of transmission signals (36) and/or reception signals (38) with respect to a main monitored direction (42) of the at least one sensor device (14) and for ascertaining a spatial distribution of object points (40) of the at least one object (18, 20), at which the transmission signals (36) are reflected and transmitted back to the sensor device (14) as reception signals (38), relative to the at least one sensor device (14) from a relationship between the transmission signals (36) and the reception signals (38), wherein the apparatus (34) has at least one categorization part (46) for categorizing the at least one object (18, 20) as stationary or non-stationary, **characterized in that** the at least one categorization part (46) is designed to ascertain at least one direction of extent (54, 56, 58) of the at least one object (18, 20) and, should the at least one direction of extent (54) extend parallel and/or obliquely with respect to the main monitored direction (42), at least one density ascertainment device of the at least one categorization part (46) is designed to ascertain at least one spatial density of the captured object points (40) in at least one region (70) of the at least one object (18, 20) and at least one comparison device of the at least one categorization part (46) is designed to compare the density to a predetermined or predeterminable threshold and to categorize the at least one object (18, 20) as stationary or non-stationary on the basis of the result of the comparison.

8. Sensor device (14) of a vehicle (10) having at least one apparatus (34) according to Claim 7 for optically capturing at least one object (18, 20), comprising at least one transmitter for emitting optical transmission signals (36) into a monitored region (16) and at least one receiver for capturing transmission signals (36) reflected at object points (40) of the at least one object (18, 20) as reception signals (38).

9. Driver assistance system (12) of a vehicle (10) having at least one sensor device (14) according to Claim 8.

## Revendications

1. Procédé (48) de détection optique d'au moins un objet (18, 20) comprenant au moins un dispositif détecteur (14) d'un véhicule (10), selon lequel, avec l'au moins un dispositif détecteur (14), des signaux d'émission (36) optiques sont émis dans une zone de surveillance (16) et les signaux d'émission (36) réfléchis par des points d'objet (40) de l'au moins un objet (18, 20) sont acquis sous la forme de signaux de réception (38) avec résolution angulaire en référence à une direction de surveillance principale (42) de l'au moins un dispositif détecteur (14), et une distribution dans l'espace des points d'objet (40) de l'au moins un objet (18, 20) par rapport à l'au moins un dispositif détecteur (14) est déterminée à partir d'une relation entre les signaux d'émission (36) et les signaux de réception (38) et l'au moins un objet (18, 20) est catégorisé en tant que fixe ou non fixe, **caractérisé en ce qu'**au moins une direction de projection (54, 56, 58) de l'au moins un objet (18, 20) est déterminée et, dans le cas où l'au moins une direction de projection (54) suit un tracé parallèle et/ou oblique par rapport à la direction de surveillance principale (42), une densité dans l'espace des points d'objet (40) détectés dans au moins une zone (70) de l'au moins un objet (20) est déterminée et, dans le cas où la densité des points d'objet (40) détectée est inférieure à une valeur de seuil pouvant être ou étant prédéfinie, l'au moins un objet (20) est catégorisé comme étant fixe.

2. Procédé selon la revendication 1, **caractérisé en ce que** la densité des points d'objet (40) détectés est déterminée dans au moins une portion (70) de l'au moins un objet (20) à l'opposé du dispositif détecteur (14).

3. Procédé selon l'une des revendications précédentes, **caractérisé en ce qu'**au moins une direction de projection (54, 56, 58) de l'au moins un objet (18, 20) est déterminée et, dans le cas où au moins deux directions de projection (58) de l'au moins un objet (18) sont détectées, qui suivent un tracé oblique, notamment perpendiculaire l'une à l'autre, l'au moins un objet (18) est catégorisé comme étant non fixe.

4. Procédé selon l'une des revendications précédentes, **caractérisé en ce que** le procédé (48) est mis en œuvre plusieurs fois et les catégorisations effectuées à ces occasions sont traitées statistiquement.

5. Procédé selon l'une des revendications précédentes, **caractérisé en ce qu'**une vitesse relative de l'au moins un objet (18, 20) par rapport au véhicule (10) est déterminée à partir d'une relation entre les signaux d'émission (36) et les signaux de réception (38) et, dans le cas où la vitesse relative est de l'ordre d'environ 0 m/s, une catégorisation de l'au moins un objet (18, 20) est effectuée sur la base de la densité des points d'objet (40) et/ou de la direction de projection (54, 56, 58) de l'au moins un objet (18, 20), dans le cas contraire aucune catégorisation supplémentaire n'est effectuée.

6. Procédé selon l'une des revendications précédentes, **caractérisé en ce qu'**une distance et/ou vitesse relative d'au moins un point d'objet (40) de l'au moins un objet (18, 20) est déterminée selon un procédé de mesure du temps de propagation de la lumière.

7. Arrangement (4) d'un dispositif détecteur (14) d'un véhicule (10) servant à la détection optique d'au moins un objet (18, 20) comprenant au moins une partie d'interprétation (34) destinée à déterminer au moins une résolution angulaire de directions de propagation de signaux d'émission (36) et/ou de signaux de réception (38) en référence à une direction de surveillance principale (42) de l'au moins un dispositif détecteur (14) et à déterminer une distribution dans l'espace de points d'objet (40) de l'au moins un objet (18, 20), au niveau desquels les signaux d'émission (36) sont réfléchis et renvoyés au dispositif détecteur (14) sous la forme de signaux de réception (38), par rapport à l'au moins un dispositif détecteur (14) à partir d'une relation entre les signaux d'émission (36) et les signaux de réception (38), l'arrangement (34) possédant au moins une partie de catégorisation (46) destinée à catégoriser l'au moins un objet (18, 20) en tant que fixe ou non fixe, **caractérisé en ce que** l'au moins une partie de catégorisation (46) est conçue pour déterminer au moins une direction de projection (54, 56, 58) de l'au moins un objet (18, 20) et, dans le cas où l'au moins une direction de projection (54) suit un tracé parallèle et/ou oblique par rapport à la direction de surveillance principale (42), au moins un dispositif de détermination de densité est conçu pour déterminer une densité dans l'espace des points d'objet (40) détectés dans au moins une zone (70) de l'au moins un objet (18, 20) et au moins un dispositif de comparaison de l'au moins une partie de catégorisation (46) est conçu pour comparer la densité avec une valeur de seuil pouvant être ou étant prédéfinie et pour catégoriser l'au moins un objet (18, 20) en tant que fixe ou non fixe en fonction du résultat de la comparaison.

8. Dispositif détecteur (14) d'un véhicule (10) comprenant au moins un arrangement (34) selon la revendication 7 destiné à la détection optique d'au moins un objet (18, 20), comprenant au moins un émetteur servant à l'émission de signaux d'émission (36) optiques dans une zone de surveillance (16) et au moins un récepteur servant à acquérir des signaux d'émission (36) réfléchis au niveau de points d'objet (40) de l'au moins un objet (18, 20) sous la forme de signaux de réception (38) .

9. Système d'assistance au conducteur (12) d'un véhicule (10), comprenant au moins un dispositif détecteur (14) selon la revendication 8.
